# FASCICULE DE BREVET EUROPEEN

(11) **EP 4 484 394 B1**
(45) Date de publication et mention de la délivrance du brevet: **11.03.2026**
(21) Numéro de dépôt: 24180710.6
(22) Date de dépôt: 07.06.2024
(51) Int. Cl.: C03C 27/02, B23K 1/00

(54) **PROCÉDÉ D'ASSEMBLAGE DIRECT D'UNE PORTION DE STRUCTURE DE VERRE À UN ÉLÉMENT MÉTALLIQUE**
VERFAHREN ZUM DIREKTEN VERBINDEN EINES GLASSTRUKTURTEILS MIT EINEM METALLELEMENT
METHOD FOR DIRECTLY JOINING A GLASS STRUCTURE PORTION TO A METAL MEMBER

(30) Priorité: 19.06.2023 FR 2306264
(43) Date de publication de la demande: 01.01.2025
(73) Titulaire: Viessmann Holding International GmbH, 35108 Allendorf (Eder) (DE)
(72) Inventeur: PORTHA, Nicolas, 57385 TRITTELING REDLACH (FR)
(74) Mandataire: Ipsilon

(56) Documents cités:
- GB-A- 956 365
- IT-A1- RM20 090 599
- US-A1- 2012 324 952

## Description

La présente invention se rapporte au domaine des procédés d'assemblage d'une portion de structure de verre avec un élément métallique et plus particulièrement aux procédés d'assemblage qui font intervenir des coefficients de dilatation différents.

L'assemblage d'une structure de verre avec un élément métallique notamment par fusion d'une extrémité du verre sur l'élément métallique est une technique de liaison classique, voire même parfois nécessaire, pour permettre de s'affranchir de la présence d'un liant comme intermédiaire entre le verre et le métal. Cet assemblage direct permet également d'obtenir une liaison efficace de verre au métal qui correspond à un scellage mécaniquement résistant et susceptible d'assurer une parfaite étanchéité au niveau de la jonction entre les deux matières. Ce type d'assemblage est ainsi particulièrement prisé pour la construction de connecteurs électriques ou d'éléments étanches au vide nécessaire en électronique, dans des systèmes informatiques ou encore pour la réalisation de tubes solaires.

Le principe de l'assemblage verre-métal fait notamment intervenir un chauffage de l'extrémité de la structure du verre à une température supérieure à celle de son point de fusion et une mise en contact avec l'extrémité de l'élément métallique avant son refroidissement. La mise en œuvre de cette technologie impose toutefois certains prérequis tels que le nettoyage des surfaces mises en contact, ou encore la décarburation de l'extrémité métallique destinée à participer à la liaison de façon à éviter une apparition de bulles au niveau de l'interface verre-métal. De même, une étape d'oxydation des extrémités destinées à être mise en contact de façon à permettre d'en améliorer l'adhérence.

La publication US 6,324,870 propose une solution détaillée faisant intervenir ce principe d'assemblage verre-métal. L'une des étapes nécessaires, sinon indispensables, au procédé proposé permettant de réaliser une liaison verre-métal efficace repose sur une opération de polissage électrolytique de l'extrémité métallique de façon à en réduire l'épaisseur jusqu'à une valeur de l'ordre de 0,01 mm, cette opération étant notamment effectuée dans une solution sulfo-phosphorique. Toutefois, cette solution pour réaliser un assemblage verre-métal exige l'utilisation d'un bain chimique dans la préparation de la portion métallique de la liaison à effectuer et donc impose des contraintes, tant légales que sécuritaires, pour la mise en œuvre effective du procédé proposé.

IT RM20 090 599 A1, GB 956 365 A, US 2012/324952 A1 divulguent des procédés d'assemblage d'un verre et d'un métal, comprenant les étapes suivantes: chauffage du verre et du métal à une température d'au moins 400°C, mise en contact du verre et du métal, suivi du refroidissement dudit verre et métal assemblés.

La présente invention a pour but de pallier cet inconvénient en proposant une solution qui permet, d'une part, de s'affranchir d'une étape imposant l'utilisation d'un bain chimique et, d'autre part, de conserver les qualités des liaisons verre-métal obtenues par des procédés d'assemblage connus de l'art antérieur.

L'invention concerne un procédé d'assemblage direct d'une portion de structure de verre à un élément métallique comprenant des coefficients de dilatation respectifs différents, caractérisé en ce que le procédé comprend :
- une étape de chauffage de la portion de verre et de l'élément métallique à une température supérieure à au moins 400°C,
- une étape de mise en contact du verre et de l'élément métallique,
- une étape de refroidissement différencié des pièces en contact consistant notamment en un refroidissement plus rapide de l'élément métallique par rapport à la portion de verre.

L'invention porte aussi sur un produit comprenant une jonction entre une structure de verre et un élément métallique, caractérisé en ce que la jonction est obtenue par un procédé d'assemblage selon l'invention.

L'invention porte également sur un dispositif de mise en œuvre d'un procédé d'assemblage selon l'invention, caractérisé en ce que le dispositif comprend :
- une interface support d'une structure de verre en contact avec un élément métallique,
- un mécanisme de refroidissement par projection de gaz contre au moins une partie de l'élément métallique.

L'invention sera mieux comprise, grâce à la description ci-après, qui se rapporte aux modes de réalisation préférés, donnés à titre d'exemples non limitatifs, et expliqués avec référence au dessin schématique annexé, dans lequel :

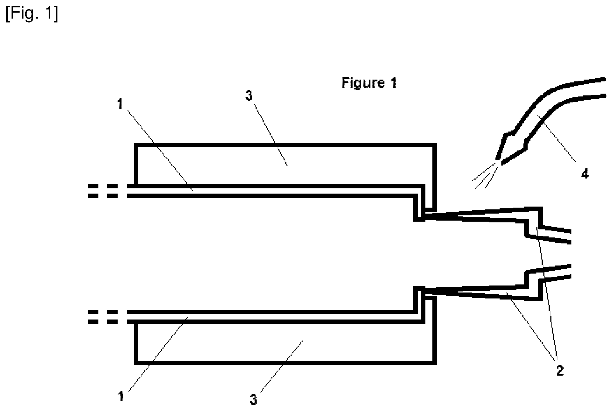

[Fig. 1] représente une illustration schématique d'un exemple de construction d'un dispositif pour la mise en œuvre d'un procédé d'assemblage direct selon l'invention.

L'invention porte sur un procédé d'assemblage direct d'une portion de structure de verre 1 à un élément métallique 2 comprenant des coefficients de dilatation respectifs différents, caractérisé en ce que le procédé comprend :
- une étape de chauffage de la portion de verre 1 et de l'élément métallique 2 à une température supérieure à au moins 400°C,
- une étape de mise en contact du verre 1 et de l'élément métallique 2,
- une étape de refroidissement différencié des pièces 1, 2 en contact consistant notamment en un refroidissement plus rapide de l'élément métallique 2 par rapport à la portion de verre 1.

Dans le cadre d'un assemblage verre-métal faisant intervenir une étape de chauffage, il convient de rappeler que le coefficient de dilatation du verre 1 est inférieur à celui de l'élément métallique 2. Aussi, après chauffage et mise en contact des deux pièces 1, 2, le phénomène de contraction supporté par l'élément métallique 2 est plus important que celui du verre au niveau de la jonction entre les deux pièces 1, 2. Cette différence de contraction à température équivalente conduit alors à une diminution de l'adhérence des matières entre elles et une fragilisation de l'interaction entre les matières ou de leur adhésion au niveau de la jonction des deux pièces 1, 2. En faisant intervenir une étape de refroidissement différencié entre les deux pièces 1, 2 réunies, le procédé d'assemblage selon l'invention permet d'assurer un contrôle des phénomènes de contraction supportés par chacune des deux pièces 1, 2. Le refroidissement différencié des matières respectives des deux pièces 1, 2 en contact s'opère en particulier en contrôlant la variation des températures respectives de chacune des deux pièces 1, 2. Ce contrôle permet conjointement d'opérer une gestion des phénomènes de contractions respectives supportées par les matières respectives des deux pièces 1, 2 en contact, de sorte que des phénomènes de contractions similaires, voire même identiques, des matières sont en mesure d'être obtenus au niveau de leurs jonctions. La similarité de la contraction des matières lors du refroidissement différencié permet d'obtenir une déformation similaire des matières au niveau de leur interaction et de limiter les phénomènes de fragilisation à ce niveau. Ainsi, au cours de l'étape de refroidissement différencié, l'extrémité de la pièce métallique 2 qui présente un coefficient de dilatation supérieur est maintenue à une température inférieure à celle de la pièce en verre 1 qui présente un coefficient de dilatation inférieur.

Selon un exemple illustrant une variante de mise en œuvre préférée de l'étape de refroidissement différencié, cette étape est opérée, d'une part, jusqu'à une température d'au moins 400°C du verre et, d'autre part, jusqu'à une température d'au moins 250°C du métal. En deçà de ces températures respectives, en particulier en deçà d'une température d'au moins 400°C, le verre en refroidissement s'écarte de la température de son point de vitrification et perd les propriétés élastiques apportées par le chauffage. Aussi, la matière du verre en refroidissement n'est plus à même de s'adapter à la dilatation du métal de sorte que l'impact d'un refroidissement différencié sur l'interaction et l'adhésion des deux matières entre elles est négligeable, sinon nul. Un refroidissement par contact à la seule température ambiante est alors suffisant.

Il convient de relever que l'étape de chauffage n'est pas limitée à 400°C mais est susceptible d'être effectuée à une température supérieure à la température de transition vitreuse du verre, à savoir 450°C. Ainsi cette étape de chauffage est susceptible d'être effectuée à une température bien supérieure telle que de l'ordre de 500°, voire même 600°C. De façon préférée, seul le verre 1 est chauffé à de telles températures, en particulier lorsque le chauffage est de l'ordre de 500 ou 600°C. Aussi, lorsque l'étape de chauffage est réalisée à une température de l'ordre de 400°C, le refroidissement différencié est obtenu, d'une part, en maintenant la température du verre 1 au-dessus de celle du métal 2 préférentiellement à une température de l'ordre de 400°C et, d'autre part, en accentuant le refroidissement du métal 2.

Selon un exemple illustrant une autre variante du procédé d'assemblage de l'invention susceptible d'être mise en œuvre conjointement aux variantes précédemment détaillées, l'étape de refroidissement différencié fait intervenir une étape de projection de flux de gaz ciblé au niveau d'au moins une partie de la surface de l'élément métallique 2. La projection de gaz contre l'élément métallique 2 permet d'opérer un refroidissement par convection thermique au niveau l'environnement en contact direct avec la surface à refroidir. Le gaz projeté présente alors une température inférieure à celle de la surface de l'élément métallique. Selon une mise en œuvre préférée, la température du gaz projeté est d'au plus 250°C. Le gaz projeté est susceptible d'être de l'oxygène, de l'azote, un gaz rare tel que l'argon ou encore, plus simplement, de l'air naturel. De façon préférentielle également, cette projection de gaz est réalisée à partir d'un mécanisme tel qu'une buse 4 permettant un ciblage bien spécifique d'une zone ou de l'ensemble de la surface de l'élément métallique 2 en évitant une projection de gaz contre la surface de la structure de verre 1. Il convient de relever qu'une étape de refroidissement faisant intervenir une projection de gaz permet de cibler une zone de la surface de l'élément métallique 2 indépendamment de la présence d'un relief particulier ou de circonvolutions spécifiques au niveau de la surface de cet élément métallique 2.

Selon un exemple illustrant une autre variante du procédé d'assemblage de l'invention susceptible d'être mise en œuvre conjointement aux variantes précédemment détaillées, l'étape de refroidissement différencié fait intervenir une étape de mise en contact du seul élément métallique 2 avec un élément de refroidissement de façon à opérer un refroidissement par conduction thermique de l'élément métallique 2. Cet élément de refroidissement présente une température inférieure à celle de la surface de l'élément métallique. Selon une mise en œuvre préférée, la température de l'élément de refroidissement est d'au plus 250°C. Selon un exemple particulier de mise en œuvre de cette variante du procédé de l'invention, l'élément de refroidissement présente au moins une surface de contact de forme sensiblement complémentaire à au moins une partie de la surface de l'élément métallique 2 à refroidir. Cette complémentarité de forme permet d'opérer une interaction thermique optimisée entre l'élément de refroidissement et la surface de l'élément métallique 2. Selon un autre exemple particulier, l'élément de refroidissement est arrangé sous la forme d'un manchon complémentaire de l'élément métallique 2 configuré pour l'entourer et le refroidir. L'élément de refroidissement est susceptible d'être réalisé sous la forme d'une structure qui intègre un ou plusieurs accumulateurs de froid ou blocs eutectiques. Ces accumulateurs de froid ou blocs eutectiques sont ainsi refroidis préalablement à la mise en contact de l'élément de refroidissement avec l'élément métallique 2. Au cours de l'opération de refroidissement, les accumulateurs de froid ou blocs eutectiques absorbent au moins une partie de la chaleur de l'élément métallique 2. L'élément de refroidissement est également susceptible d'être réalisé sous la forme d'une structure qui intègre un circuit de circulation pour un fluide caloporteur arrangé pour optimiser ses échanges thermiques avec l'élément métallique 2 et absorber au moins une partie de sa chaleur.

Selon un exemple illustrant une autre variante du procédé d'assemblage de l'invention susceptible d'être mise en œuvre conjointement aux variantes précédemment détaillées, l'étape de refroidissement différencié fait intervenir une séparation des environnements immédiats respectifs de la structure de verre 1 et de l'élément métallique 2 de façon à optimiser l'absorption de chaleur au niveau des surfaces respectives de la structure de verre 1 et de l'élément métallique 2. Selon un exemple de mise en œuvre, cette séparation des environnements immédiats fait intervenir un moyen de séparation 3 telle qu'une capsule isolante ou de rétention thermique. Ce moyen de séparation est arrangé pour envelopper, au moins partiellement, la structure de verre 1 associée à l'élément métallique 2 et ainsi limiter, voire idéalement empêcher, un refroidissement parasite de la structure de verre 1 par un élément de refroidissement dédié à tout ou partie de la surface de l'élément métallique 2.

Selon un exemple illustrant une autre variante du procédé d'assemblage de l'invention susceptible d'être mise en œuvre conjointement aux variantes précédemment détaillées, l'étape de refroidissement différencié fait intervenir un refroidissement d'une partie de la portion de verre 1 par conduction thermique avec l'élément métallique 2 refroidi plus rapidement. L'étape de refroidissement différencié intervenant postérieurement à l'étape de mise en contact du verre 1 avec l'élément métallique 2, l'élément métallique 2 en cours de refroidissement et à une température inférieure à celle de la structure en verre 1 est également en mesure de participer au refroidissement de cette structure en verre 1 par un phénomène de conduction thermique par l'intermédiaire de l'interface formant la jonction physique entre les matières des deux pièces 1, 2 en contact. Ainsi, à partir d'une unique source d'absorption de chaleur dirigée vers l'élément métallique 2, la structure en verre 1 est également en mesure d'être refroidie.

Selon un exemple illustrant une autre variante du procédé d'assemblage de l'invention susceptible d'être mise en œuvre conjointement aux variantes précédemment détaillées, le procédé comprend également, préalablement à l'étape de chauffage, une étape d'usinage de l'extrémité de l'élément métallique 2 destinée à être en contact avec le verre 1, de sorte que cette extrémité présente une épaisseur d'au plus 8/100 de millimètres. Le procédé d'assemblage de l'invention permet ainsi de s'affranchir d'un process chimique dans le cadre d'une étape d'amincissement de l'élément métallique 2 jusqu'à une épaisseur de l'ordre du 1/100 de millimètre. Aussi, le procédé de l'invention est susceptible d'être mis en œuvre pour l'assemblage d'un élément métallique 2 plus épais ou qui n'a pas supporté un usinage avec une précision de l'ordre du 1/100 de millimètre.

Selon un exemple illustrant une autre variante du procédé d'assemblage de l'invention susceptible d'être mise en œuvre conjointement aux variantes précédemment détaillées, le procédé comprend une étape de sélection d'au moins un acier inoxydable dont la composition comprend un taux de carbone inférieur à 0,1% pour la réalisation d'au moins l'extrémité de l'élément métallique 2 destinée à être en contact avec le verre 1. Cette étape de sélection préalable permet d'opérer un assemblage verre-métal qui optimise la qualité de la jonction verre-métal en limitant les risques de fragilisation sous l'effet de bulles en lien avec un dégagement de CO₂ lors de la mise en contact de l'extrémité de l'élément métallique 2 avec le verre 1. De façon préférée, l'acier inoxydable sélectionné est un acier bas carbone de type 304L ou de type 316L. Il convient de relever que, pour ces types d'acier bas carbone, l'étape de traitement de l'élément métallique 2 avec une décarburation conduit au retrait d'une quantité restreinte de carbone.

L'invention porte également sur un produit comprenant une jonction entre une structure de verre 1 et un élément métallique 2, caractérisé en ce que la jonction est obtenue par un procédé d'assemblage selon l'invention.

Selon un exemple illustrant une variante de réalisation du produit de l'invention, celui-ci est caractérisé en ce que la zone de jonction entre la structure de verre 1 et l'élément métallique 2 correspond à un arrangement cylindrique à section circulaire. Cet arrangement particulier du produit certes permet la réalisation de connecteur électronique, mais également une coopération par complémentarité de forme facilitée de la surface de l'élément métallique 2 ou de la structure de verre 1 avec, respectivement, un moyen de séparation 3 ou un élément de refroidissement.

L'invention concerne également un dispositif de mise en œuvre d'un procédé d'assemblage selon l'invention, caractérisé en ce que le dispositif comprend :
- une interface support d'une structure de verre 1 en contact avec un élément métallique 2,
- un mécanisme de refroidissement par projection de gaz 4 contre au moins une partie de l'élément métallique 2.

Selon un exemple illustrant une variante de réalisation du dispositif de l'invention, celui-ci est caractérisé en ce qu'il comprend un moyen de séparation 3 telle qu'une capsule isolante ou de rétention thermique apte à envelopper, au moins partiellement, la structure de verre 2 associée à l'élément métallique 1. Ce moyen de séparation permet ainsi de limiter, voire idéalement d'empêcher, un refroidissement parasite de la structure de verre 1 par un élément de refroidissement dédié à tout ou partie de la surface de l'élément métallique 2.

Bien entendu, l'invention n'est pas limitée aux modes de réalisation décrits et représentés au dessin annexé. Des modifications restent possibles, notamment du point de vue de la constitution des divers éléments, sans sortir pour autant du domaine de protection de l'invention.

## Revendications

1. Procédé d'assemblage direct d'une portion de structure de verre (1) à un élément métallique (2) comprenant des coefficients de dilatation respectifs différents, **caractérisé en ce que** le procédé comprend :
- une étape de chauffage de la portion de verre (1) et de l'élément métallique (2) à une température supérieure à au moins 400°C,
- une étape de mise en contact du verre (1) et de l'élément métallique (2),
- une étape de refroidissement différencié des pièces en contact consistant en un refroidissement plus rapide de l'élément métallique (2) par rapport à la portion de verre (1).

2. Procédé d'assemblage selon la revendication 1, **caractérisé en ce que** l'étape de refroidissement différencié fait intervenir une étape de projection de flux de gaz ciblé au niveau d'au moins une partie de la surface de l'élément métallique (2).

3. Procédé d'assemblage selon une des revendications précédentes, **caractérisé en ce que** l'étape de refroidissement différencié fait intervenir une étape de mise en contact du seul élément métallique (2) avec un élément de refroidissement de façon à opérer un refroidissement par conduction thermique de l'élément métallique (2).

4. Procédé d'assemblage selon une des revendications précédentes, **caractérisé en ce que** l'étape de refroidissement différencié fait intervenir un refroidissement d'une partie de la portion de verre (1) par conduction thermique avec l'élément métallique (2) refroidi plus rapidement.

5. Procédé d'assemblage selon une des revendications précédentes, **caractérisé en ce que** le procédé comprend également, préalablement à l'étape de chauffage, une étape d'usinage de l'extrémité de l'élément métallique (2) destinée à être en contact avec le verre (1), de sorte que cette extrémité présente une épaisseur d'au plus 8/100 de millimètres.

6. Procédé d'assemblage selon une des revendications précédentes, **caractérisé en ce que** le procédé comprend une étape de sélection d'au moins un acier inoxydable dont la composition comprend un taux de carbone inférieur à 0,1% pour la réalisation d'au moins l'extrémité de l'élément métallique (2) destinée à être en contact avec le verre (1).

7. Dispositif de mise en œuvre d'un procédé d'assemblage selon une des revendications 1 à 6, **caractérisé en ce que** le dispositif comprend :
- une interface support d'une structure de verre (1) en contact avec un élément métallique (2),
- un mécanisme de refroidissement par projection de gaz (4) contre au moins une partie de l'élément métallique (2).

8. Dispositif de mise en œuvre selon la revendication 7, **caractérisé en ce que** le dispositif comprend un moyen de séparation (3) telle qu'une capsule isolante ou de rétention thermique apte à envelopper, au moins partiellement, la structure de verre (1) associée à l'élément métallique (2).

## Patentansprüche

1. Verfahren zum direkten Verbinden eines Glasstrukturabschnitts (1) mit einem Metallelement (2), die unterschiedliche jeweilige Ausdehnungskoeffizienten aufweisen, **dadurch gekennzeichnet, dass** das Verfahren umfasst:
- einen Schritt des Erwärmens des Glasabschnitts (1) und des Metallelements (2) auf eine Temperatur von mindestens mehr als 400 °C;
- einen Schritt des Inkontaktbringens des Glases (1) und des Metallelements (2),
- einen Schritt des differenzierten Abkühlens der in Kontakt stehenden Teile, bestehend in einem schnelleren Abkühlen des Metallelements (2) in Bezug auf den Glasabschnitt (1).

2. Verfahren zum Verbinden nach Anspruch 1, **dadurch gekennzeichnet, dass** an dem Schritt des differenzierten Abkühlens ein Schritt des Sprühens eines gezielten Gasstroms an mindestens einem Teil der Oberfläche des Metallelements (2) beteiligt ist.

3. Verfahren zum Verbinden nach einem der vorhergehenden Ansprüche, **dadurch gekennzeichnet, dass** an dem Schritt des differenzierten Abkühlens ein Schritt des Inkontaktbringens nur des Metallelements (2) mit einem Kühlelement beteiligt ist, so dass ein Abkühlen durch Wärmeleitung des Metallelements (2) vorgenommen wird.

4. Verfahren zum Verbinden nach einem der vorhergehenden Ansprüche, **dadurch gekennzeichnet, dass** an dem Schritt des differenzierten Abkühlens ein Abkühlen eines Teils des Glasabschnitts (1) durch Wärmeleitung mit dem schneller abgekühlten Metallelement (2) beteiligt ist.

5. Verfahren zum Verbinden nach einem der vorhergehenden Ansprüche, **dadurch gekennzeichnet, dass** das Verfahren ferner vor dem Schritt des Erwärmens einen Schritt des Bearbeitens des Endes des Metallelements (2), das dazu bestimmt ist, mit dem Glas in Kontakt zu sein (1), umfasst, so dass dieses Ende eine Dicke von höchstens 8/100 Millimeter aufweist.

6. Verfahren zum Verbinden nach einem der vorhergehenden Ansprüche, **dadurch gekennzeichnet, dass** das Verfahren einen Schritt des Auswählens mindestens eines Edelstahls, dessen Zusammensetzung einen Kohlenstoffgehalt von weniger als 0,1 % umfasst, zum Ausführen mindestens des Endes des Metallelements (2), das dazu bestimmt ist, mit dem Glas (1) in Kontakt zu sein, umfasst.

7. Vorrichtung zur Durchführung eines Verfahrens zum Verbinden nach einem der Ansprüche 1 bis 6, **dadurch gekennzeichnet, dass** die Vorrichtung umfasst:
- eine tragende Schnittstelle einer Glasstruktur (1) in Kontakt mit einem Metallelement (2),
- einen Mechanismus zum Abkühlen durch Sprühen von Gas (4) gegen mindestens einen Teil des Metallelements (2).

8. Vorrichtung zur Durchführung nach Anspruch 7, **dadurch gekennzeichnet, dass** die Vorrichtung ein Trennmittel (3) wie eine isolierende oder Wärmerückhaltekapsel umfasst, die geeignet ist, die mit dem Metallelement verbundene Glasstruktur (1) mindestens teilweise zu umhüllen (2).

## Claims

1. Method for direct assembly of a glass structure portion (1) with a metal element (2), which comprise different respective coefficients of expansion, **characterized in that** the method comprises:
- a step of heating the glass portion (1) and the metal element (2) to a temperature higher than at least 400°C,
- a step of bringing the glass (1) and the metal element (2) into contact,
- a step of differentiated cooling of the pieces in contact consisting of more rapid cooling of the metal element (2) compared with the glass portion (1).

2. Assembly method according to Claim 1, **characterized in that** the differentiated cooling step involves a step of spraying a targeted gas flow at at least a part of the surface of the metal element (2).

3. Assembly method according to either of the preceding claims, **characterized in that** the differentiated cooling step involves a step of bringing only the metal element (2) into contact with a cooling element so as to carry out cooling by thermal conduction of the metal element (2).

4. Assembly method according to one of the preceding claims, **characterized in that** the differentiated cooling step involves cooling a part of the glass portion (1) by thermal conduction with the more rapidly cooled metal element (2).

5. Assembly method according to one of the preceding claims, **characterized in that** the method also comprises, prior to the heating step, a step of machining the end of the metal element (2) that is intended to be in contact with the glass (1), such that this end has a thickness of at most 8/100 millimetres.

6. Assembly method according to one of the preceding claims, **characterized in that** the method comprises a step of selecting at least one stainless steel of which the composition comprises a carbon content of less than 0.1% for the production of at least the end of the metal element (2) that is intended to be in contact with the glass (1).

7. Device for implementing an assembly method according to one of Claims 1 to 6, **characterized in that** the device comprises:
- a support interface of a glass structure (1) in contact with a metal element (2),
- a mechanism for cooling by spraying gas (4) against at least a part of the metal element (2).

8. Implementation device according to Claim 7, **characterized in that** the device comprises a separating means (3) such as an insulating or thermal retention cap that is able to at least partially envelop the glass structure (1) associated with the metal element (2).
